# EUROPÄISCHE PATENTANMELDUNG

(11) **EP 4 678 470 A1**
(43) Veröffentlichungstag der Anmeldung: **14.01.2026**
(21) Anmeldenummer: 24187013.8
(22) Anmeldetag: 08.07.2024
(51) Int. Cl.: B60P 1/02, B60G 17/017

(54) **BESTIMMUNG EINER HÖHE EINER LADERAMPE**

(71) Anmelder: Schmitz Cargobull AG, 48341 Altenberge (DE)
(72) Erfinder: Weyring, Bernd, 48629 Metelen (DE); Buyting, Leander, 46397 Bocholt (DE); Kaup, Carsten, 48653 Coesfeld (DE); Voth, Hendrik, 48734 Reken (DE); Queckenstedt, Birger, 46325 Borken (DE)
(74) Vertreter: Cohausz & Florack

(57) **Zusammenfassung**

Es wird unter anderem ein Verfahren offenbart, wobei das Verfahren umfasst:
- Erfassen, mittels eines Sensors des Transportfahrzeugs, zumindest einer Aufnahme zumindest eines Teils einer Laderampe,
- Identifizieren zumindest eines an der Laderampe angebrachten Markierungselements basierend auf zumindest einer der zumindest einen Aufnahme,
- Ableiten, basierend auf dem zumindest einen angebrachten Markierungselement, einer Laderampenhöhe der Laderampe,
- Bestimmen einer an die abgeleitete Laderampenhöhe der Laderampe angepassten Ladeflächenhöhe einer Ladefläche des Transportfahrzeugs basierend auf der abgeleiteten Laderampenhöhe und
- Einstellen der Ladeflächenhöhe des Transportfahrzeugs auf die bestimmte angepasste Ladeflächenhöhe.

## Beschreibung

### Gebiet

Die Erfindung betrifft ein Verfahren und Vorrichtungen zur Bestimmung einer Höhe einer Laderampe, insbesondere durch ein Fahrzeug, insbesondere ein Transportfahrzeug, insbesondere einen Trailer.

### Hintergrund

Transportfahrzeuge werden zum Be- und Entladen häufig an Laderampen positioniert.

### Zusammenfassung einiger beispielhafter Ausführungsformen der Erfindung

Die Erfindung befasst sich unter anderem damit, eine Laderampenhöhe einer jeweiligen Laderampe zu bestimmen, insbesondere zum Zwecke einer Anpassung einer Höhe einer Ladefläche des Transportfahrzeugs an die Laderampenhöhe.

Es wurde erkannt, dass Laderampenhöhen variieren. Ferner wurde erkannt, dass insbesondere bei geeigneter Höhenabstimmung zwischen einer Ladefläche des Transportfahrzeugs und der Laderampe ein Be- und Entladen besonders zeitsparend und sicher gelingen kann. Eine manuelle Angleichung zwischen Ladeflächenhöhe und Laderampenhöhe wurde als fehleranfällig, aufwändig und langsam erkannt.

Ferner wurde erkannt, dass eine automatisierte Bestimmung der Laderampenhöhe teils unter Einsatz von vermeidbaren, aufwändigen Infrastrukturen umgesetzt wird. Beispielsweise können auf einem Server (z.B. einem Server in einem Warenlager) gespeicherte Laderampenhöhen per (z.B. drahtloser) Kommunikationskanäle an ein Transportfahrzeug übermittelt werden. Auch wurde erkannt, dass bestehende Laderampen oft nur mit hohem Aufwand in ein automatisiertes Laderampenhöhenbestimmungssystem eingegliedert werden können.

Eine Aufgabe der vorliegenden Erfindung ist es daher, mit möglichst geringem Aufwand eine automatisierte Bestimmung einer Laderampenhöhe zu ermöglichen.

Gemäß einem ersten Aspekt der Erfindung wird ein Verfahren offenbart, wobei das Verfahren umfasst:
- Erfassen, mittels eines Sensors eines Transportfahrzeugs, zumindest einer Aufnahme zumindest eines Teils einer Laderampe,
- Identifizieren zumindest eines an der Laderampe angebrachten Markierungselements basierend auf zumindest einer der zumindest einen Aufnahme,
- Ableiten, basierend auf dem zumindest einen Markierungselement, einer Laderampenhöhe der Laderampe,
- Bestimmen einer an die abgeleitete Laderampenhöhe angepassten Ladeflächenhöhe einer Ladefläche des Transportfahrzeugs basierend auf der abgeleiteten Laderampenhöhe und
- Einstellen der Ladeflächenhöhe des Transportfahrzeugs auf die bestimmte angepasste Ladeflächenhöhe.

Das offenbarte Verfahren wird beispielsweise durch eine Vorrichtung, zum Beispiel eine Steuereinheit für das Transportfahrzeug, insbesondere eine Telematikeinheit für das Transportfahrzeug, ausgeführt.

Dementsprechend wird gemäß der Erfindung ferner eine Vorrichtung offenbart, wobei die Vorrichtung Mittel eingerichtet zur Ausführung des offenbarten Verfahrens umfasst. Die offenbarte Vorrichtung ist beispielsweise das Transportfahrzeug oder ein Teil des Transportfahrzeugs. Wenn im Folgenden beschrieben ist, dass ein Transportfahrzeug einen Schritt ausführt, ist damit unter anderem offenbart, dass die Vorrichtung den Schritt ausführt oder steuert.

Die Mittel können Hardware- und/oder Software-Komponenten umfassen. Die Mittel können beispielsweise mindestens einen Speicher mit Programmanweisungen eines Computerprogramms (z.B. des unten offenbarten Computerprogramms) und mindestens einen Prozessor ausgebildet zum Ausführen von Programmanweisungen aus dem mindestens einen Speicher umfassen. Dementsprechend soll auch eine Vorrichtung als offenbart verstanden werden, die zumindest einen Prozessor und zumindest einen Speicher mit Programmanweisungen umfasst, wobei der zumindest eine Speicher und die Programmanweisungen eingerichtet sind, gemeinsam mit dem zumindest einen Prozessor, die Vorrichtung zu veranlassen, das offenbarte Verfahren auszuführen. Es versteht sich, dass die offenbarte Vorrichtung auch andere nicht aufgeführte Mittel umfassen kann.

Alternativ oder zusätzlich können die Mittel ferner eine oder mehrere Kommunikationsschnittstellen (z.B. einen oder mehrere drahtgebundene und/oder drahtlose Kommunikationsschnittstellen) und/oder eine oder mehrere Benutzerschnittstellen (z.B. eine Tastatur, eine Maus, einen Bildschirm, einen berührungsempfindlichen Bildschirm, einen Lautsprecher, ein Mikrofon, usw.) umfassen. Es versteht sich, dass die Vorrichtung gemäß dem zweiten Aspekt der Erfindung auch andere nicht aufgeführte Mittel umfassen kann.

Ferner wird ein Computerprogramm offenbart, wobei das Computerprogramm Programmanweisungen umfasst, die dazu ausgebildet sind, bei Ausführung durch mindestens einen Prozessor eine Vorrichtung (z.B. die oben offenbarte Vorrichtung) zu veranlassen, das Verfahren auszuführen.

Das offenbarte Computerprogramm ist beispielsweise auf einem computerlesbaren Speichermedium enthalten und/oder gespeichert. Unter einem computerlesbaren Speichermedium soll beispielsweise ein physisches und/oder berührbares Speichermedium verstanden werden.

Das offenbarte Verfahren, die offenbarte Vorrichtung und das offenbarte Computerprogramm dienen beispielsweise zum Bestimmen eines Standorts des Transportfahrzeugs.

Im Folgenden werden die Eigenschaften des offenbarten Verfahrens (im Folgenden auch als "Verfahren" bezeichnet), der offenbarten Vorrichtung (im Folgenden auch als "Vorrichtung" bezeichnet) sowie des offenbarten Computerprogramms (im Folgenden auch als "Computerprogramm" bezeichnet) - teilweise beispielhaft - beschrieben. Es versteht sich, dass das Verfahren, die Vorrichtung und das Computerprogramm zueinander korrespondieren, so dass die Offenbarung eines Merkmals für eine dieser Kategorien als Offenbarung eines korrespondierenden Merkmals für die anderen Kategorien verstanden werden soll.

Unter einem Transportfahrzeug soll insbesondere (i) ein Nutzfahrzeuggespann oder (ii) ein Nutzfahrzeuganhänger, insbesondere ein Nutzfahrzeuganhänger für ein Straßenfahrzeug wie ein Starrdeichselanhänger oder ein Gelenkdeichselanhänger oder ein Sattelauflieger verstanden werden. Solche Nutzfahrzeuganhänger sind insbesondere für den Transport von Gütern, vorzugsweise Stückgütern, im öffentlichen Straßenverkehr vorgesehen. Zu diesem Zweck weisen Nutzfahrzeuganhänger unterschiedliche Arten von Nutzfahrzeugaufbauten auf, welche der Aufnahme der zu transportierenden Güter in einem Laderaum dienen. So sind beispielsweise Kofferaufbauten mit festen Seitenwänden, einer festen Stirnwand, einer durch Flügeltüren gebildeten Rückwand und einem festen Dach bekannt, welche den Laderaum umschließen. Da die Kofferaufbauten geschlossen sind, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport geeignet. Neben Kofferaufbauten sind zudem sogenannte Planenaufbauten bekannt, bei denen die Seitenwände und das Dach durch wenigstens eine Plane verschlossen sind. Die Stirnwand ist bei Planenaufbauten meist als feste Wand ausgebildet, während die Rückwand regelmäßig durch zwei Flügeltüren gebildet wird, um den Laderaum bedarfsweise von hinten zu beladen. Wenn eine Plane entlang der Seitenwand verschoben werden kann, spricht man auch von sogenannten Curtainsidern. Dementsprechend soll unter einem Nutzfahrzeugaufbau beispielsweise ein Kofferaufbau, ein Planenaufbau und/oder ein Curtainsider verstanden werden.

Der Nutzfahrzeuganhänger ist beispielsweise eingerichtet, mit einem Zugfahrzeug gekoppelt zu werden, um ein Nutzfahrzeuggespann mit dem Zugfahrzeug zu bilden. Zu diesem Zweck können der Nutzfahrzeuganhänger und das Zugfahrzeug beispielsweise jeweils zueinander korrespondierende Kopplungsmittel umfassen, die eingerichtet sind, um eine Verbindung (z.B. eine mechanische Verbindung und/oder eine elektrische Verbindung und/oder eine pneumatische Verbindung) zwischen dem Nutzfahrzeuganhänger und dem Zugfahrzeug herzustellen. Zum Beispiel umfassen die zueinander korrespondierenden Verbindungsmittel korrespondierende Teile eines Kupplungssystems wie einer Sattelkupplung, einer Bolzenkupplung oder einer Kugelkopfkupplung. Wenn das Zugfahrzeug mit dem Nutzfahrzeuganhänger (z.B. durch die oben offenbarten zueinander korrespondierenden Verbindungsmittel) verbunden ist, bilden das jeweilige Zugfahrzeug und der jeweilige Nutzfahrzeuganhänger beispielsweise ein Nutzfahrzeuggespann (z.B. einen Lastzug und/oder einen Sattelzug), so dass das jeweilige Zugfahrzeug den jeweiligen Nutzfahrzeuganhänger zieht.

Das Verfahren umfasst ein Erfassen zumindest eine Aufnahme zumindest eines Teils einer Laderampe.

Eine Aufnahme kann hierbei beispielsweise ein analoges oder digitales Signal sein. Beispielsweise kann die Aufnahme in digitaler Form repräsentiert sein, beispielsweise für eine Auswertung der Aufnahme, beispielsweise für ein darauffolgendes Identifizieren, Ableiten und/oder Bestimmen gemäß dem Verfahren des ersten Aspekts. Die Aufnahme kann beispielsweise ein Bild umfassen.

Die zumindest eine Aufnahme wird mittels eines Sensors eines Transportfahrzeugs, insbesondere des Transportfahrzeugs, welches das Verfahren gemäß des ersten Aspekts steuert und/oder ausführt, erfasst.

Es können sowohl ein einziger als auch mehrere, beispielsweise zumindest 2, 3, 4, 5 oder mehr, Sensoren zum Erfassen der zumindest einen Aufnahme verwendet werden. Beispielsweise können mehrere Sensoren von zueinander verschiedenen Typs und/oder voneinander verschiedener Sensorposition aufgenommen werden.

Ein Sensor kann beispielsweise eine Kamera oder einen Scanner (z.B. Barcode oder QR-Code Scanner) umfassen. Beispielsweise kann der Sensor eingerichtet sein, eine ein- oder zweidimensionale Aufnahme zu erfassen. Insbesondere kann der Sensor außerstande sein, eine dreidimensionale Aufnahme zu erfassen.

Die Laderampe ist insbesondere eine Laderampe, an welche sich das Transportfahrzeug aktuell (z.B. rückwärts) annähert, beispielsweise für eine Be- und/oder Entladung des Transportfahrzeugs.

Eine Laderampe umfasst insbesondere einen Teil eines Gebäudes. Beispielsweise umfasst die Laderampe ein im Wesentlichen horizontales Ladeplateau. Das Ladeplateau kann beispielsweise im Wesentlichen auf einer Höhe eines Lagers angeordnet sein, welches in einem Warenaustausch mit einem an der Laderampe positionierten Transportfahrzeug steht. Das Ladeplateau ist beispielsweise (z.B. seitlich und/oder stirnseitig) begrenzt, beispielsweise durch eine Stirnfläche. Die Stirnfläche und das Ladeplateau können sich an einer Stirnkante der Laderampe treffen. Beispielsweise können an dem Ladeplateau mehrere, beispielsweise nebeneinander angeordnete, Laderampen angeordnet sein. Das Ladeplateau kann beispielsweise gegenüber einem Bodenniveau eines Bodens abgehoben sein. Beispielsweise befindet sich in Höhe des Bodenniveaus eine befahrbare Fläche, auf der sich ein Transportfahrzeug der Laderampe annähern kann. Beispielsweise steht das Transportfahrzeug, sobald es sich der Laderampe hinreichend stark angenähert hat, mit seinen Reifen auf der befahrbaren Fläche. Damit steht das Transportfahrzeug auf einer niedrigeren Ebene im Vergleich zur Ebene des Ladeplateaus.

Es wird mittels des Sensors des Transportfahrzeugs zumindest ein Teil der Laderampe erfasst. Beispielsweise kann zumindest ein Teil der Stirnfläche der Laderampe, der Stirnkante der Laderampe und/oder des Ladeplateaus aufgenommen werden. Auch kann (z.B. im Wesentlichen) die gesamte Stirnfläche der Laderampe, die gesamte Stirnkante der Laderampe und/oder das gesamte Ladeplateau aufgenommen werden, beispielsweise kann die gesamte Laderampe aufgenommen werden, beispielsweise von einem Sensor und/oder gemeinsam von mehreren Sensoren.

Das Verfahren umfasst ferner ein Identifizieren zumindest eines an der Laderampe angebrachten Markierungselements. Das Identifizieren basiert auf zumindest einer der zumindest einen erfassten Aufnahme.

Das Identifizieren umfasst beispielsweise ein Bestimmen eines Teils und/oder eines Ausschnitts der Aufnahme, in welchem sich das an der Laderampe angebrachten Markierungselement befindet. Beispielsweise können sich in der Aufnahme mehrere an Laderampen aufgebrachte Markierungselemente finden lassen. Das Identifizieren kann hierbei beispielsweise umfassen, eines der Markierungselemente auszuwählen, beispielsweise ein Markierungselement, welches einer Laderampe zugeordnet ist, welcher sich das Transportfahrzeug annähert (und beispielsweise nicht an einer benachbarten Laderampe).

Das Markierungselement kann insbesondere ein optisch erfassbares Markierungselement sein, beispielsweise eine Beschriftung, ein Schild, eine Bemalung, ein Aufkleber, ein Aushang, eine Anzeige, beispielsweise eine LCD- und/oder LED-Anzeige und/oder Kombinationen hieraus. Die Markierung kann an der Laderampe angebracht sein, beispielsweise an der Stirnfläche der Laderampe, dem Laderampenplateau und/oder der Stirnkante der Laderampe.

Das Markierungselement kann an der Laderampe selbst, beispielsweise an der Stirnfläche der Laderampe, dem Laderampenplateau und/oder der Stirnkante der Laderampe eingebracht sein. Auch kann das Markierungselement beispielsweise in einer Nähe, beispielsweise unmittelbarer Nähe, zu der Laderampe angebracht sein, beispielsweise an einem Gebäude, welches an die Laderampe angrenzt und/oder auf einem Boden, welcher an die Laderampe angrenzt.

Das Verfahren umfasst ferner ein Ableiten einer Laderampenhöhe der Laderampe. Das Ableiten basiert auf dem zumindest einen Markierungselement, welches in der zumindest einen erfassten Aufnahme identifiziert wurde. Beispielsweise umfasst das Ableiten ein Auslesen einer Informationen aus dem zumindest einen Markierungselement. Beispielsweise kann in dem Markierungselement eine Information enthalten sein, welche indikativ für die Laderampenhöhe ist.

Die Laderampenhöhe ist insbesondere eine Höhendifferenz zwischen dem Niveau eines Bodenbereichs, auf welchem ein Transportfahrzeug sich der Laderampe annähern kann, und dem Niveau eines Laderampenplateaus. Beispielsweise kann die Laderampenhöhe als eine Höhe der Stirnfläche der Laderampe, beispielsweise (z.B. gemittelt) über eine Breite der Laderampe gemittelt, bestimmt sein.

In einem weiteren Schritt umfasst das Verfahren ein Bestimmen einer an die abgeleitete Laderampenhöhe angepassten Ladeflächenhöhe einer Ladefläche des Transportfahrzeugs, basierend auf der abgeleiteten Laderampenhöhe. Beispielsweise kann die angepasste Ladeflächenhöhe im Wesentlichen als die abgeleitete Laderampenhöhe bestimmt werden, wobei beispielsweise die angepasste Ladeflächenhöhe höchstens um 1 %, 2 %, 5 % oder 1 0% der abgeleiteten Laderampenhöhe und/oder höchstens 1 cm, 2 cm, 5 cm oder 10 cm von der abgeleiteten Laderampenhöhe abweicht. Auch kann die angepasste Ladeflächenhöhe als ein höherer oder niedrigerer Wert als die abgeleitete Laderampenhöhe bestimmt werden, beispielsweise höher oder tiefer um zumindest 10 %, 15 %, 20 %, 25 %, 30 %, 40 % oder 50 % der abgeleiteten Laderampenhöhe und/oder zumindest 10 cm, 15 cm, 20 cm, 25 cm, 30 cm, 40 cm oder 50 cm.

Das Bestimmen einer Ladeflächenhöhe kann beispielsweise zumindest teilweise darauf basieren, ob das Transportfahrzeug an der Laderampe beladen wird oder entladen wird. Beispielsweise kann die Ladeflächenhöhe auf einen höheren Wert als die Laderampenhöhe eingestellt werden, wenn das Transportfahrzeug entladen wird. Beispielsweise kann umgekehrt die Ladeflächenhöhe auf einen niedrigeren Wert als die Laderampenhöhe eingestellt werden, wenn das Transportfahrzeug beladen wird.

Ferner umfasst das Verfahren ein Einstellen der Ladeflächenhöhe des Transportfahrzeugs auf die bestimmte angepasste Ladeflächenhöhe. Beispielsweise kann das Transportfahrzeug hierfür eine (Ladeflächen-) Einstellvorrichtung umfassen, welche beispielsweise hydraulisch und/oder pneumatisch betrieben wird.

Es wurde erkannt, dass Laderampen üblicherweise oberhalb eines Bodenniveaus angeordnet sind. Ferner wurde erkannt, dass Laderampenhöhen variieren können, beispielsweise durch bauliche Unterschiede, Unterschiede in regionalen Gewohnheiten, unterschiedliche Abnutzungsgrade, beispielsweise auch eine Abnutzung des Bodens im Bereich der Laderampe. Eine manuelle Anpassung einer Ladeflächenhöhe an eine Laderampenhöhe kann zeitaufwendig und/oder fehleranfällig sein. Das Verfahren gemäß dem ersten Aspekt ermöglicht es, die Ladeflächenhöhe eines Transportfahrzeugs an eine Laderampenhöhe anzupassen, insbesondere dann, wenn die Laderampe ein Markierungselement aufweist, welches eine Ableitung der Laderampenhöhe ermöglicht. Es wurde erkannt, dass die Laderampenhöhe auf diese Art und Weise besonders einfach, kostengünstig und flexibel bestimmt werden kann.

Insbesondere kann das Verfahren kommunikationslos, d. h. ohne einen Datenaustausch (z.B. ohne ein Empfangen von Daten und/oder ein Senden von Daten, insbesondere während der Ausführung des Verfahrens) zwischen dem Transportfahrzeug und einer (z.B. jeglichen) weiteren Vorrichtung, beispielsweise einem Server, einem anderen Transportfahrzeug, einem Mobilgerät und/oder Kombinationen hieraus ausführbar sein und/oder ausgeführt werden.

In beispielhaften Ausführungsformen des ersten Aspekts, wird vorgeschlagen, dass
- der Sensor eine Kamera umfasst, insbesondere wobei eine Position und/oder ein Blickwinkel der Kamera relativ zum Transportfahrzeug fixiert ist.

Der Sensor kann insbesondere eine Kamera umfassen.

Beispielsweise kann das Transportfahrzeug zumindest eine oder mehrere Kameras umfassen, welche beispielsweise dazu eingerichtet sind, einen Heckbereich (und/oder andere Umgebungsbereiche) des Transportfahrzeugs zu erfassen, beispielsweise während eines Einparkvorgangs und/oder eines Ent- oder Beladevorgangs.

Es wurde erkannt, dass Kameras sich besonders eignen, Merkmale, insbesondere optische Merkmale, der Umgebung zu erfassen. Damit können Kameras besonders geeignet sein, ein erfindungsgemäßes Markierungselement zu identifizieren, auszulesen und/oder daraus eine Laderampenhöhe abzuleiten.

Beispielsweise kann eine Position und/oder ein Blickwinkel und/oder ein Erfassungsbereich der zumindest einen Kamera relativ zum Transportfahrzeug fixiert sein. Beispielsweise kann durch eine Fixierung der Kamera erreicht werden, dass bei einer bekannten Ausrichtung des Transportfahrzeugs, beispielsweise bei einem Einparkvorgang hin zur Laderampe der Erfassungsbereich auf einen gewünschten Bereich eingestellt ist. Beispielsweise kann die Kamera durch Fixierung derart voreingestellt werden, dass vorrangig eine Laderampe, welche aktuell von dem Transportfahrzeug angefahren wird, von der Kamera erfasst wird. Beispielsweise kann die zumindest eine Kamera im Wesentlichen einen, beispielsweise unmittelbar, hinter dem Transportfahrzeug angeordneten Bereich aufnehmen. Auch kann die Kamera derart eingerichtet sein, beispielsweise derart fixiert sein und/oder ein hierfür geeignetes Blickfeld aufweisen, dass sie einen Teil des Bodens vor einer Laderampe, eine Stirnfläche einer Laderampe und/oder ein Laderampenplateau einer Laderampe, insbesondere einer Laderampe, welche das Transportfahrzeug anfährt, erfasst.

In beispielhaften Ausführungsformen des ersten Aspekts, wird vorgeschlagen, dass
- zumindest eines des zumindest einen Markierungselements an einer senkrechten Stirnfläche der Laderampe angebracht ist, insbesondere benachbart zu einer Stirnkante der Laderampe, und/oder
- zumindest eines des zumindest einen Markierungselements an einem Laderampenplateau angebracht ist, insbesondere benachbart zu der Stirnkante der Laderampe.

Gemäß einem zweiten beispielhaften Aspekt wird ein Verfahren zur Bearbeitung einer Laderampe, beispielsweise auf einem Trailer Yard, offenbart, umfassend:
- Anbringen zumindest eines Markierungselements an einer senkrechten Stirnfläche der Laderampe, insbesondere benachbart zu einer Stirnkante der Laderampe, und/oder
- Anbringen zumindest eines Markierungselements an einem Laderampenplateau, insbesondere benachbart zu der Stirnkante der Laderampe.

Ein Trailer Yard kann beispielsweise ein Areal umfassen, auf welchem zumindest eines oder eine Vielzahl von Transportfahrzeugen abstellbar ist. Beispielsweise können Transportfahrzeuge dort zur Zwischenlagerung geparkt, gewartet und/oder aus- oder beladen werden.

Durch ein Anbringen des zumindest einen des zumindest einen Markierungselements an einer Stirnfläche der Laderampe, welche insbesondere zumindest im Wesentlichen senkrecht (z.B. im Wesentlichen parallel zur Richtung der Erdbeschleunigung) ausgerichtet ist, kann das Markierungselement besonders gut auszulesen sein, insbesondere von einer Kamera. Beispielsweise kann eine perspektivische Verzerrung des Markierungselements bei Anbringung an einer Stirnfläche besonders gering ausfallen, insbesondere wenn sich das Transportfahrzeug noch nicht in (z.B. unmittelbarer) Nähe zur Laderampe befindet. Auch kann das Markierungselement beispielsweise auf diese Art und Weise einen Be- und/oder Entladevorgang besonders wenig beeinträchtigen und/oder vor Wettereinflüssen geschützt sein.

Durch ein derartiges Anbringen des zumindest einen des zumindest einen Markierungselements kann das Markierungselement beispielsweise auch gut lesbar bleiben, auch wenn das Transportfahrzeug bereits dicht bis an die Laderampe herangefahren ist.

Das Transportfahrzeug kann derart eingerichtet sein, dass es einen entsprechenden Bereich der Laderampe, an dem das Markierungselement (z.B. üblicherweise) angebracht ist, in einer Aufnahme erfasst. Das Transportfahrzeug kann also eingerichtet sein, eine senkrechte Stirnfläche der Laderampe zu erfassen, insbesondere einen Bereich der Stirnfläche, welcher benachbart zu einer Stirnkante der Laderampe ist. Das Transportfahrzeug kann alternativ oder zusätzlich eingerichtet sein, zumindest ein Laderampenplateau zu erfassen, insbesondere einen Bereich des Laderampenplateaus, welcher benachbart zu der Stirnkante der Laderampe ist.

In beispielhaften Ausführungsformen des ersten und/oder zweiten Aspekts, wird vorgeschlagen, dass zumindest eines des zumindest einen Markierungselements
- nachträglich an der Laderampe anbringbar ist (z.B. nach einem Errichten und/oder baulichen Fertigstellen der Laderampe),
- lösbar an der Laderampe befestigt ist,
- an der Laderampe aufgeklebt ist und/oder
- ein Ausdruck ist, insbesondere in einem DIN A Format, insbesondere DIN A4.

Das Markierungselement kann beispielsweise mehrere voneinander unterscheidbare Flächen aufweisen. Beispielsweise kann das Markierungselement eine Struktur umfassen, welche das Markierungselement von anderen Markierungselementen, beispielsweise Markierungselementen, welche auf anderen Laderampen, beispielsweise eines Trailer Yards, angebracht sind, unterscheiden. Beispielsweise kann das Markierungselement einer (z.B. eindimensionale) Anordnung von Strichen aufweisen, beispielsweise einen Barcode. Alternativ oder zusätzlich kann das Markierungselement eine (z.B. zweidimensionale) Anordnung von Teilflächen wie z.B. Rechtecken, beispielsweise Quadraten, oder Kreisen aufweisen, beispielsweise einen Quick Response, QR,-Code. Das Markierungselement kann beispielsweise zumindest einen oder mehrere Buchstaben (z.B. lateinische Buchstaben) und oder Ziffern (z.B. arabische Ziffern) aufweisen.

Das Markierungselement kann beispielsweise maschinenlesbar, insbesondere maschinenlesbar und dabei unlesbar für den Menschen, oder maschinenlesbar und menschenlesbar sein.

Das zumindest eine Markierungselement kann beispielsweise an dem Laderampenplateau anbringbar sein. Beispielsweise kann das zumindest eine Markierungselement nachträglich, beispielsweise nachdem die Rampe bereits fertiggestellt ist, an der Rampe anbringbar sein. Insbesondere kann das Markierungselement lösbar an der Laderampe befestigt sein. Beispielsweise kann das Markierungselement angeschraubt, angeklebt, aufgehängt, eingehängt, angenagelt, angetackert, eingeschoben und/oder angelehnt sein. Auch kann das Markierungselement beispielsweise an der Laderampe aufgemalt und/oder aufgedruckt sein.

Das Markierungselement kann beispielsweise ausgedruckt sein. Beispielsweise kann das Markierungselement auf ein Papier und/oder eine Pappe aufgedruckt werden. Beispielsweise kann das Markierungselement ein druckerkompatibles Format aufweisen, beispielsweise ein DIN A Format, beispielsweise DIN A4.

Das Markierungselement kann beispielsweise im Wesentlichen passiv, beispielsweise frei von einer externen und/oder internen Stromversorgung, ausgeführt sein. Beispielsweise kann das Markierungselement insbesondere keinen Speicher, Prozessor und/oder Kombinationen hieraus aufweisen.

Das Markierungselement kann beispielsweise aktiv ausgeführt sein, beispielsweise umfassend zumindest eine interne und/oder externe Energieversorgung und/oder eine Anzeigevorrichtung, beispielsweise ein Display, beispielsweise ein LCD-Display und/oder ein LED-Display. Beispielsweise kann das Markierungselement eine Anzeigevorrichtung umfassen, welche beispielsweise mittels eines Prozessors und/oder eines Speichers angesteuert wird. Beispielsweise kann auf diese Weise eine veränderlicher und/oder eine konfigurierbare Information des Markierungselements erreicht werden.

Das Markierungselement kann insbesondere einen Teilbereich der Laderampe einnehmen, z.B. einen geringen Teilbereich der Laderampe. Beispielsweise kann das Markierungselement (z.B. nur) weniger als 0,1 %, 0,2 % 0,5 %, 1 %, 2 %, oder 5 % der Laderampe und/oder der Stirnfläche der Laderampe und/oder des Laderampenplateaus einnehmen. Das Transportfahrzeug kann derart eingerichtet sein, dass ein Identifizieren des Markierungselements auch ein Erkennen eines Markierungselements ermöglicht, welches im Verhältnis zu einem von der Aufnahme umfassten Bereichs klein ist und/oder eine Position des Markierungselements relativ zur Rampe variiert. Hierdurch kann beispielsweise ermöglicht werden, dass auch (z.B. nachträglich) an einer Laderampe angebrachte Markierungselemente, welche beispielsweise eine flexible, z.B. nicht-standardisierte Position aufweisen, erkannt werden.

In beispielhaften Ausführungsformen des ersten und/oder zweiten Aspekts, wird vorgeschlagen, dass zumindest eines des zumindest einen Markierungselements
- schwarz-weiß ausgeführt ist und/oder
- farbcodiert ausgeführt ist.

Das Markierungselement kann beispielsweise schwarz-weiß ausgeführt sein. Hierdurch kann das Markierungselement auf besonders einfache Art und Weise ausgeführt werden. Beispielsweise kann ein Schwarz-Weiß-Drucker genügen, um das Markierungselement herzustellen. Anstatt Schwarz und Weiß können auch zwei zumindest teilweise davon verschiedene Farben genutzt werden. Das Markierungselement kann zweifarbig ausgeführt sein.

Auch kann das Markierungselement farbcodiert ausgeführt sein. Beispielsweise kann das Markierungselement zumindest drei, vier oder mehr verschiedene Farben aufweisen. Die verschiedenen Farben können beispielsweise auch Schwarz und Weiß umfassen.

Beispielsweise kann das Markierungselement einfarbig sein. In diesem Fall kann beispielsweise die Farbe des Markierungselements das Markierungselement von anderen Markierungselementen unterscheiden. Beispielsweise kann die Farbe auf eine Höhe der Laderampe hindeuten und/oder diese anzeigen.

In beispielhaften Ausführungsformen des ersten und/oder zweiten Aspekts, wird vorgeschlagen, dass zumindest eines des zumindest einen Markierungselements
- eine Information zu der Laderampenhöhe enthält, insbesondere wobei
   - das Markierungselement einen computerlesbarer Code umfasst, insbesondere einen Barcode, einen QR-Code, und/oder einen menschenlesbaren Code, beispielsweise einen Schriftzug, umfasst und/oder
   - die Information zu der Ladehöhe eine vorbestimmte maximale Abweichung von einer tatsächlichen Laderampenhöhe aufweist, insbesondere maximal 20 cm, 10 cm, 5 cm, 2 cm oder 1cm.

Zumindest eines des zumindest einen Markierungselements enthält eine Information zu der Laderampenhöhe. Beispielsweise kann die Information hinreichend sein dafür, die Laderampenhöhe abzuleiten, insbesondere ohne weitere laderampenbezogene Informationen. Beispielsweise kann hierdurch das Verfahren lokal und/oder kommunikationslos ausgeführt werden. Beispielsweise kann das Verfahren auch ohne Hinterlegung weiterer Informationen in dem Transportfahrzeug, beispielsweise in der Vorrichtung, ausgeführt werden. Hierdurch kann sichergestellt werden, dass keine falsche Laderampenhöhe durch Bezugnahme auf inkorrekte hinterlegte Informationen (beispielsweise in einem Speicher des Transportfahrzeugs und/oder eines damit kommunikativ verbundenen Servers) abgeleitet wird.

Alternativ kann die Information auch lediglich indikativ für die Laderampenhöhe sein. Beispielsweise kann die Information mittels zumindest einer oder mehrerer weiterer Informationen bezüglich der Laderampenhöhe, beispielsweise einer Tabelle und/oder einer Look-up-Table, zu einer Laderampenhöhe kombiniert werden.

Das Markierungselement kann beispielsweise mehrere voneinander unterscheidbare Flächen aufweisen. Beispielsweise kann das Markierungselement eine Struktur umfassen, welche das Markierungselement von anderen Markierungselementen, beispielsweise Markierungselementen, welche auf anderen Laderampen, beispielsweise eines Trailer Yards, angebracht sind, unterscheidet. Beispielsweise kann das Markierungselement einer (z.B. eindimensionalen) Anordnung von Strichen aufweisen, beispielsweise einen Barcode. Alternativ oder zusätzlich kann das Markierungselement eine (z.B. zweidimensionale) Anordnung von Teilflächen wie z.B. Rechtecken, beispielsweise Quadraten oder Kreisen aufweisen, beispielsweise einen Quick Response, QR,-Code. Das Markierungselement kann beispielsweise zumindest einen oder mehrere Buchstaben (z.B. lateinische Buchstaben) und oder Ziffern (z.B. arabische Ziffern) aufweisen.

Das Markierungselement kann beispielsweise maschinenlesbar, insbesondere maschinenlesbar und dabei unlesbar für den Menschen, oder maschinenlesbar und menschenlesbar sein.

Die in dem Markierungselement hinterlegte Information kann eine Laderampenhöhe angeben, welche von der tatsächlichen Laderampenhöhe um höchstens eine maximale Abweichung abweicht. Beispielsweise kann die maximale Abweichung relativ bestimmt sein, beispielsweise auf maximal 20 %, 15 %, 10 %, 5 %, 2 % oder 1 % der tatsächlichen Laderampenhöhe. Auch kann beispielsweise die Abweichung absolut bestimmt sein, beispielsweise auf maximal 20 cm, 10 cm, 5 cm, 2 cm oder 1 cm.

In beispielhaften Ausführungsformen des ersten Aspekts, wird vorgeschlagen, dass
- das Ableiten der Laderampenhöhe lokal von dem Transportfahrzeug vorgenommen wird.

Die Laderampenhöhe keinen beispielsweise lokal von dem Transportfahrzeug vorgenommen werden, insbesondere von der Vorrichtung. Beispielsweise kann die Laderampenhöhe kommunikationslos, z.B. ohne, dass das Transportfahrzeug und/oder die Vorrichtung in Kommunikation (z.B. in Datenaustausch) mit einer davon getrennten Vorrichtung, beispielsweise einem Server und/oder einem Bewirtschaftungssystem (z.B. eines Warenlagers) tritt. Beispielsweise kann hierdurch sichergestellt werden, dass das Transportfahrzeug eine Laderampenhöhe bestimmen kann, ohne hierfür auf die Verfügbarkeit einer von dem Transportfahrzeug separaten Infrastruktur angewiesen zu sein.

Beispielsweise kann eine Information, welche aus dem Markierungselement ausgelesen wird, genutzt werden, um die Laderampenhöhe abzuleiten. Beispielsweise kann die Information bereits die Laderampenhöhe umfassen. Beispielsweise kann die Information durch zumindest einen oder mehrere Verarbeitungsschritte zu einer Laderampenhöhe verarbeitet werden.

In beispielhaften Ausführungsformen des ersten und/oder zweiten Aspekts wird vorgeschlagen, dass
- die Laderampe frei von einer Ausgleichsklappe und/oder einer Ladebrücke ist.

Beispielsweise kann das Verfahren derart ausgestaltet sein, dass es eine Anpassung der Ladeflächenhöhe derart präzise ermöglicht, dass die Laderampe frei von einer Ausgleichsklappe und/oder einer Ladebrücke sein kann. Beispielsweise kann dies der Fall sein, wenn die Ladeflächenhöhe mit hinreichender Präzision und/oder innerhalb einer akzeptablen Abweichung von der Laderampenhöhe eingestellt wird. Beispielsweise kann die anhand des Markierungselements abgeleiteten Laderampenhöhe eine relative Abweichung von maximal 1 %, 2%, oder 5 % (z.B. der tatsächlichen Laderampenhöhe) betragen und/oder eine absolute Abweichung von maximal 1 cm, 2 cm oder 5 cm betragen.

Die Laderampe kann damit frei von einer (z.B. dauerhaft) an der Laderampe angebrachten Ausgleichsklappe und/oder einer Ladebrücke sein. Eine Ausgleichsklappe und/oder Ladebrücke kann beispielsweise aufseiten der (z.B. als Funktionseinheit der) Laderampe entbehrlich sein.

In beispielhaften Ausführungsformen des ersten Aspekts, umfasst das Verfahren ferner
- Bestimmen einer Neigung des Transportfahrzeugs mittels eines Neigungssensors des Transportfahrzeugs.

In beispielhaften Ausführungsformen des ersten Aspekts, wird vorgeschlagen, dass
- das Bestimmen der angepassten Ladeflächenhöhe zumindest teilweise basierend auf der bestimmten Neigung des Transportfahrzeugs erfolgt.

Gemäß einem Ausführungsbeispiel kann das Verfahren ferner ein Bestimmen einer Neigung des Transportfahrzeugs umfassen. Die Neigung kann beispielsweise mittels eines Neigungssensors des Transportfahrzeugs bestimmt werden. Insbesondere kann es sich bei der Neigung um eine Neigung um eine räumliche Achse handeln, beispielsweise um eine räumliche Achse, welche zumindest im Wesentlichen (z.B. bis auf eine Abweichung von höchstens +/- 1 °, 2 ° oder 5 °) zu einer Radachse des Transportfahrzeugs parallel ist.

Das Bestimmen der angepassten Ladeflächenhöhe kann zumindest teilweise auf der derart bestimmten Neigung des Transportfahrzeugs basieren. Beispielsweise kann die angepasste Ladeflächenhöhe basierend auf der bestimmten Neigung niedriger und/oder höher ausfallen, als diese ohne die Bestimmung der Neigung bestimmt worden wäre. Beispielsweise, wenn das Transportfahrzeug und/oder die Ladefläche des Transportfahrzeugs um eine Radachse nach vorne geneigt ist, also beispielsweise in einem Bereich des Transportfahrzeugs, der in üblicher Vorwärtsfahrtrichtung vorne positioniert ist, durch die Neigung abgesenkt und in einem hinteren Bereich des Transportfahrzeugs erhöht ist, kann die angepasste Ladeflächenhöhe auf einen niedrigeren Wert eingestellt werden als ohne bestimmte Neigung. Bei umgekehrter Neigung des Transportfahrzeugs kann die angepasste Ladeflächenhöhe auf einen höheren Wert als ohne bestimmte Neigung eingestellt werden.

Beispielsweise kann durch die Bestimmung einer Neigung des Transportfahrzeugs eine Ladeflächenhöhe derart eingestellt werden, dass die Ladefläche des Transportfahrzeugs im Bereich eines Übergangs der Ladefläche zu der Laderampe besonders präzise an die Laderampenhöhe angepasst werden kann. Insbesondere wurde erkannt, dass bei geneigten Transportfahrzeugen, beispielsweise verursacht durch eine Beladung, beispielsweise eine ungleichmäßige Beladung, eine Ladeflächenhöhe in einem vorderen, beispielsweise zur Zugmaschine weisenden Teil des Transportfahrzeugs, und in einem hinteren, beispielsweise entgegen der Fahrtrichtung und/oder zu einer hinteren Entladeöffnung hin weisenden Teil des Transportfahrzeugs, voneinander abweichen kann.

Basierend auf der Neigung des Transportfahrzeugs kann beispielsweise die momentane Ladeflächenhöhe im hinteren Ladeflächenbereich, welche zur Laderampe weist, bestimmt werden, beispielsweise für eine gegebene Einstellung der Einstellungsvorrichtung für die Ladeflächenhöhe.

Beispielsweise kann alternativ oder zusätzlich zu einer Neigung des Transportfahrzeugs auch eine aktuelle Beladungsintensität bestimmt werden. Die Beladung sind kann insbesondere ein Gewicht, beispielsweise ein Gesamtgewicht, der Ladung des Transportfahrzeugs sein. Die Beladungsintensität kann beispielsweise durch Reifendrucksensoren, Gewichtssensoren, Sensoren zur Erfassung eines Laderaums des Transportfahrzeugs und/oder basierend auf Daten, beispielsweise Daten, welche Informationen zu der Ladung enthalten, bestimmt werden. Beispielsweise kann bekannt (z.B. in der Vorrichtung hinterlegt) sein, dass eine Ladeflächenhöhe bei einer erhöhten Beladung niedriger ausfällt als bei einem weniger beladenen und/oder nicht beladenen Transportfahrzeug.

Auch durch eine Bestimmung der Beladungsintensität kann damit eine besonders genaue Anpassung der Ladeflächenhöhe, insbesondere in einem hinteren Ladeflächenbereich, welcher zu der Laderampe weist, an die Laderampenhöhe, beispielsweise die ermittelte Laderampenhöhe, erreicht werden.

In beispielhaften Ausführungsformen des ersten Aspekts, wird vorgeschlagen, dass
- das Einstellen der Ladeflächenhöhe mittels einer Einstellvorrichtung des Transportfahrzeugs vorgenommen wird, insbesondere einer hydraulischen und/oder pneumatischen Einstellvorrichtung.

Das Transportfahrzeug kann eine Einstellvorrichtung für die Ladeflächenhöhe umfassen. Die Einstellvorrichtung kann insbesondere hydraulisch und/oder pneumatisch eingerichtet sein. Ein hydraulische und/oder pneumatische Einstellvorrichtung kann beispielsweise den Vorteil aufweisen, dass die Einstellvorrichtung auch hohen mechanischen Belastungen, beispielsweise verursacht durch eine schwere Beladung des Transportfahrzeugs, standhalten kann. Insbesondere kann sich eine hydraulische und/oder pneumatische Einstellvorrichtung dazu eignen, dauerhaft in einer eingestellten Position zu verbleiben, beispielsweise im Wesentlichen ohne hierbei durchgehend Leistung aufzunehmen.

Die Einstellvorrichtung für die Ladeflächenhöhe ist insbesondere dazu eingerichtet, die Ladeflächenhöhe zu variieren, beispielsweise im Stand des Transportfahrzeugs und/oder während der Fahrt. Beispielsweise kann die Ladeflächenhöhe von der Einstellvorrichtung um zumindest oder maximal 10 cm, 20 cm, 50 cm oder 100 cm veränderbar sein. Die Einstellvorrichtung für die Ladeflächenhöhe kann beispielsweise dazu eingerichtet sein, zumindest eine Radachse des Transportfahrzeugs von einem Transportfahrzeugkörper, beispielsweise einem Chassis des Transportfahrzeugs, in vertikaler Richtung (z.B. im Wesentlichen parallel und/oder zumindest teilweise parallel zu einer Schwerkraftrichtung) zu beabstanden (z.B. hoch- und/oder herunterzufahren). Beispielsweise kann die Einstellvorrichtung dazu eingerichtet sein, eine hintere Radachse, beispielsweise eine Radachse, welche der Laderampe in einem an die Laderampe angenäherten Zustand des Transportfahrzeugs (z.B. zum Be- und/oder Entladen), am nächsten ist, von dem Transportfahrzeugkörper in vertikaler Richtung zu beabstanden. Durch eine vertikale Beabstandung der Radachse von dem Transportfahrzeugkörper (z.B. dessen Chassis), kann die Ladeflächenhöhe vergrößert werden, insbesondere im Bereich der Radachse.

Beispielsweise kann das Verfahren bei einem Übergang aus einem fahrenden Betriebsmodus in einen stehenden Betriebsmodus ausgeführt werden.

In beispielhaften Ausführungsformen des ersten Aspekts, wird vorgeschlagen, dass
- das Verfahren von einer Steuervorrichtung des Transportfahrzeugs gesteuert und/oder kontrolliert wird, insbesondere von einer Telematikeinheit des Transportfahrzeugs.

In beispielhaften Ausführungsformen des ersten Aspekts, wird vorgeschlagen, dass das eine Transportfahrzeug eines der folgenden Fahrzeuge ist:
- ein Nutzfahrzeuggespann umfassend ein Zugfahrzeug und einen Nutzfahrzeuganhänger,
- ein Nutzfahrzeuganhänger, insbesondere ein Sattelauflieger.

Gemäß einem weiteren Aspekt der Erfindung wird offenbart: Ein Computerprogramm umfassend Programmanweisungen, die dazu ausgebildet sind, bei Ausführung durch mindestens einen Prozessor einer Vorrichtung, die Vorrichtung zu veranlassen, das Verfahren gemäß dem ersten Aspekt auszuführen.

Gemäß einem weiteren Aspekt der Erfindung wird offenbart: Eine Vorrichtung umfassend Mittel, eingerichtet zur Ausführung des Verfahrens gemäß dem ersten Aspekt. Beispielsweise kann die Vorrichtung einen oder mehrere Prozessoren zur Ausführung und/oder Steuerung und/oder Regelung der Schritte des Verfahrens aufweisen, insbesondere das Identifizieren eines Markierungselements, das Ableiten einer Laderampenhöhe, das Bestimmen einer Ladeflächenhöhe, aber beispielsweise auch das Erfassen zumindest einer Aufnahme und/oder das Einstellen einer Ladeflächenhöhe. Beispielsweise kann die Vorrichtung zumindest einen Sensor zum Erfassen der zumindest einen Aufnahme umfassen. Beispielweise kann die Vorrichtung eine oder mehrere der (z.B. oben offenbarten) Einstellvorrichtung(-en) umfassen, beispielsweise pneumatische oder hydraulische Einstellvorrichtungen, zum Einstellen der Ladeflächenhöhe des Transportfahrzeugs.

In beispielhaften Ausführungsformen wird vorgeschlagen, dass die Vorrichtung ein Transportfahrzeug oder ein Teil des Transportfahrzeugs ist, insbesondere ein Nutzfahrzeuggespann umfassend ein Zugfahrzeug und einen Nutzfahrzeuganhänger, oder ein Nutzfahrzeuganhänger, insbesondere ein Sattelauflieger.

Weitere vorteilhafte beispielhafte Ausführungsformen der Erfindung sind der folgenden detaillierten Beschreibung einiger beispielhafter Ausführungsformen der vorliegenden Erfindung, insbesondere in Verbindung mit den Figuren, zu entnehmen. Die Figuren sollen jedoch nur dem Zwecke der Verdeutlichung, nicht aber zur Bestimmung des Schutzbereiches der Erfindung dienen. Die Figuren sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

### Detaillierte Beschreibung einiger beispielhafter Ausführungsformen

Es zeigen:
- Fig. 1: eine schematische Darstellung einer beispielhaften Ausführungsform einer Vorrichtung gemäß der Erfindung;
- Fig. 2: eine schematische Darstellung einer beispielhaften Ausführungsform eines Transportfahrzeugs gemäß der Erfindung;
- Fig. 3: schematische Darstellungen einer beispielhaften Ausführungsform der Erfindung;
- Fig. 4a,b: schematische Darstellungen einer beispielhaften Ausführungsform der Erfindung; und
- Fig. 5: ein Flussdiagramm einer Ausführungsform eines Verfahrens gemäß der Erfindung.

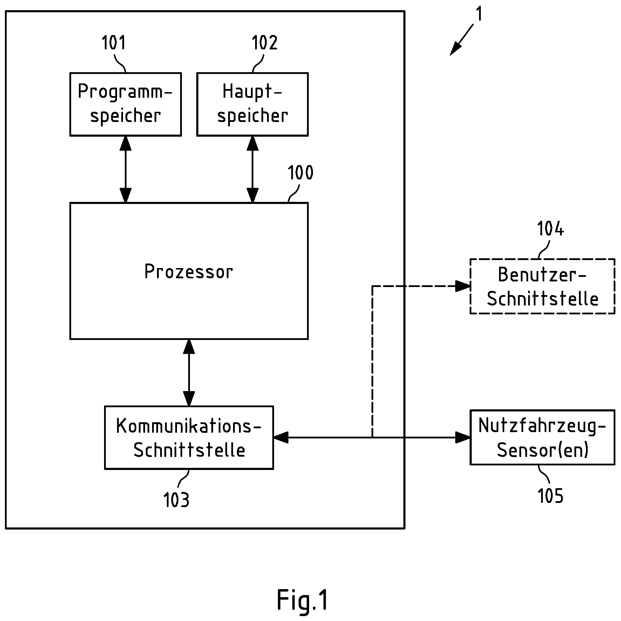

Fig. 1 zeigt eine schematische Darstellung einer Ausführungsform einer Vorrichtung 1 gemäß der Erfindung. Im Folgenden wird davon ausgegangen, dass die Vorrichtung 1 Teil eines Transportfahrzeugs in Form eines Nutzfahrzeuganhängers ist. Zum Beispiel kann die Vorrichtung 1 eine Steuereinheit und/oder Telematikeinheit des Nutzfahrzeuganhängers sein.

Die Vorrichtung 1 umfasst einen Prozessor 100 und verbunden mit dem Prozessor 100 einen ersten Speicher als Programmspeicher 101, einen zweiten Speicher als Hauptspeicher 102 und eine Kommunikationsschnittstelle 103.

Unter einem Prozessor soll beispielsweise ein Mikroprozessor (Engl. Central Processing Unit, CPU), eine Mikrokontrolleinheit, ein Mikrocontroller, ein digitaler Signalprozessor (DSP), eine Anwendungsspezifische Integrierte Schaltung (ASIC), ein Field Programmable Gate Array (FPGA), oder ein graphischer Prozessor (Engl: Graphics Processing Unit, GPU) verstanden werden. Es versteht sich, dass die Vorrichtung 1 auch mehrere Prozessoren 100 umfassen kann.

Der Prozessor 100 führt Programmanweisungen aus, die im Programmspeicher 101 gespeichert sind, und speichert beispielsweise Zwischenergebnisse oder Ähnliches im Hauptspeicher 102.

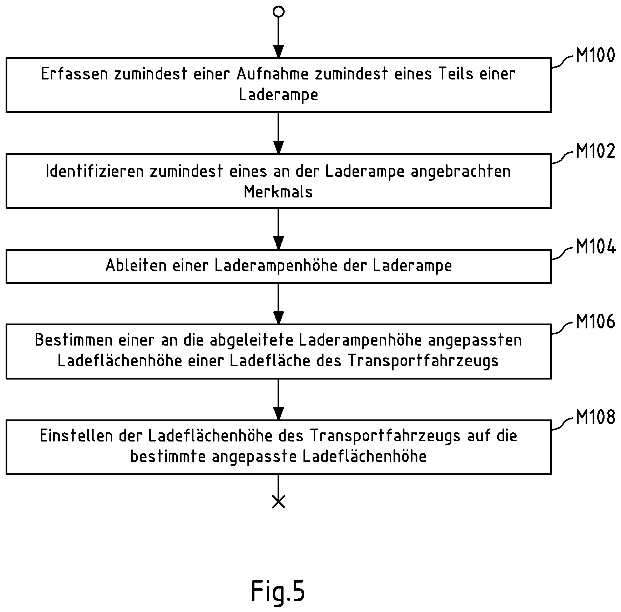

In dem Programmspeicher 101 sind beispielsweise Programmanweisungen gespeichert, die den Prozessor 100, wenn er die Programmanweisungen ausführt, veranlassen, das Verfahren gemäß der Erfindung (z.B. das Verfahren gemäß dem in Fig. 5 dargestellten Flussdiagramm) zumindest teilweise auszuführen und/oder zu steuern.

Der Programmspeicher 101 enthält ferner beispielsweise das Betriebssystem der Vorrichtung 1, das beim Starten der Vorrichtung 1 zumindest teilweise in Hauptspeicher 102 geladen und vom Prozessor 100 ausgeführt wird. Insbesondere wird beim Starten der Vorrichtung 1 zumindest ein Teil des Kerns des Betriebssystems in den Hauptspeicher 102 geladen und vom Prozessor 100 ausgeführt.

Ein Beispiel für ein Betriebssystem ist ein Windows -, UNIX-, Linux-, Android-, Apple iOS- und/oder MAC OS-Betriebssystem. Das Betriebssystem ermöglicht insbesondere die Verwendung der Vorrichtung 1 zur Datenverarbeitung. Es verwaltet beispielsweise Betriebsmittel wie einen Hauptspeicher und einen Programmspeicher, stellt unter anderem durch Programmierschnittstellen anderen Computerprogrammen grundlegende Funktionen zur Verfügung und steuert die Ausführung von Computerprogrammen.

Ein Programmspeicher ist beispielsweise ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher. Ein Hauptspeicher ist zum Beispiel ein flüchtiger oder nicht-flüchtiger Speicher, insbesondere ein Speicher mit wahlfreiem-Zugriff (RAM) wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM).

Der Hauptspeicher 102 und der Programmspeicher 101 können auch als ein Speicher ausgebildet sein. Alternativ können der Hauptspeicher 102 und/oder der Programmspeicher 101 jeweils durch mehrere Speicher gebildet werden. Ferner können der Hauptspeicher 102 und/oder der Programmspeicher 101 auch Teil des Prozessors 100 sein.

Der Prozessor 100 steuert die Kommunikationsschnittstelle 103, welche beispielsweise eingerichtet ist, Informationen mit anderen Komponenten des Nutzfahrzeuganhängers auszutauschen (z.B. zu senden und/oder zu empfangen). Die Kommunikationsschnittstelle 103 ist beispielsweise als Ethernet-, CAN-, K-Leitungs-, LIN- oder Flexray-Schnittstelle ausgebildet. Sie ist beispielsweise eingerichtet zur drahtgebundenen Kommunikation mit der optionalen Benutzerschnittstelle 104 und/oder einem oder mehreren Sensoren 105 des Nutzfahrzeuganhängers über ein Ethernet-Netzwerk oder ein CAN-, K-Leitungs-, LIN- oder Flexray-Bussystem des Nutzfahrzeuganhängers. Zum Beispiel kann die Vorrichtung 1 durch die Kommunikationsschnittstelle 103 Informationen an die Benutzerschnittstelle 104 und/oder die Nutzfahrzeugsensoren 105 senden und/oder von diesen empfangen. Ethernet ist zum Beispiel in den Standards der IEEE-802.3-Familie spezifiziert. CAN ist in den Standards der ISO 11898-Familie, K-Leitung ist in den Standards ISO 9141 und ISO 14230-1, LIN ist in den Standards der ISO 17987-Familie und FlexRay in den Standards der ISO 17458-Familie spezifiziert.

In Fig. 1 sind die Benutzerschnittstelle 104 und die Nutzfahrzeugsensoren 105 nicht als Teil der Vorrichtung 1 dargestellt. Es versteht sich jedoch, dass die Benutzerschnittstelle 104 und/oder die Nutzfahrzeugsensoren 105 auch vollständig oder teilweise Teil der Vorrichtung 1 sein kann/können, insbesondere dann, wenn die Vorrichtung 1 der Nutzfahrzeuganhänger ist sowie die Benutzerschnittstelle 104 und/oder die Nutzfahrzeugsensoren 105 Teil des Nutzfahrzeuganhängers ist/sind.

Eine Benutzerschnittstelle 104 ist beispielsweise eingerichtet, eine Information in Form einer Benutzereingabe zu erfassen und/oder eine Information an einen Benutzer auszugeben. Zum Beispiel ist die Benutzerschnittstelle 104 eine Tastatur, ein Bildschirm, ein berührungsempfindlicher Bildschirm, ein Lautsprecher, eine Hupe und/oder ein Mikrofon. Die Benutzerschnittstelle 104 ist beispielsweise Teil des Nutzfahrzeuganhängers oder eines mit dem Nutzfahrzeuganhänger gekoppelten Zugfahrzeugs.

Beispiele für die Nutzfahrzeugsensoren 105 sind ein Türöffnungssensor und/oder ein Ladegewichtssensor und/oder eine Kamera und/oder ein Erschütterungssensor und/oder ein Bewegungssensor.

Die Nutzfahrzeugsensoren 105 können zumindest teilweise Teil des Nutzfahrzeuganhängers und/oder Teil eines mit dem Nutzfahrzeuganhänger gekoppelten Zugfahrzeugs sein.

Die Komponenten 100 bis 103 der Vorrichtung 1 sind beispielsweise über einen oder mehrere Bussysteme (z.B. ein oder mehrere serielle und/oder parallele Busverbindungen) kommunikativ und/oder operativ miteinander verbunden.

Es versteht sich, dass die Vorrichtung 1 neben den dargestellten Komponenten weitere Komponenten umfassen kann.

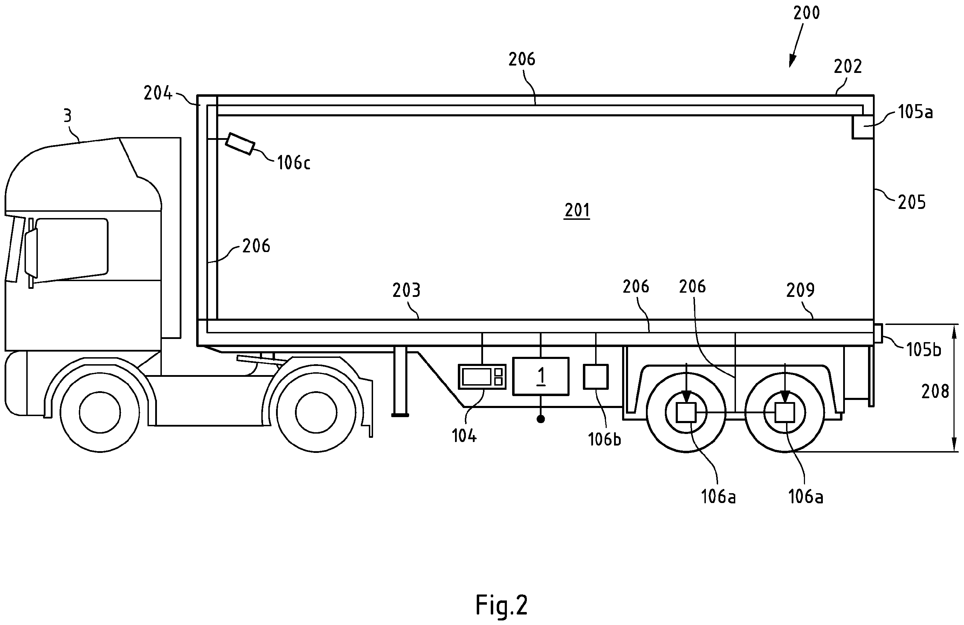

Fig. 2 zeigt eine schematische Darstellung einer beispielhaften Ausführungsform eines Nutzfahrzeuganhängers 200 als Teil eines Zuggespanns mit einem Zugfahrzeug gemäß der Erfindung. Der Nutzfahrzeuganhänger 200 ist ein Sattelauflieger. In dem Sattelauflieger 200 ist eine Vorrichtung 1 angeordnet. Im Folgenden wird beispielhaft davon ausgegangen, dass diese Vorrichtung 1 der in Fig. 1 dargestellten Vorrichtung 1 entspricht.

Im Folgenden wird die beispielhafte Ausführungsform des Sattelaufliegers 200 anhand von Fig. 2 erläutert. Der Sattelauflieger 200 umfasst einen Laderaum 201. Der Laderaum 201 des Sattelaufliegers 200 wird oben durch das Laderaumdach 202 und unten durch den Laderaumboden 203 begrenzt. Ferner wird der Laderaum durch die Stirnwand 204 und die verschließbare Hecköffnung 205 sowie nicht dargestellte seitliche Begrenzungsflächen (z.B. Seitenplanen begrenzt). Die Hecköffnung 205 wird durch eine nicht dargestellte Hecktür, zum Beispiel eine Doppelflügeltür gebildet.

Ferner umfasst Sattelauflieger 200 eine Benutzerschnittstelle 104, die in Fig. 2 beispielhaft als berührungsempfindlicher Bildschirm dargestellt ist. Die Benutzerschnittstelle 104 ist beispielsweise eingerichtet, eine Information in Form einer Benutzereingabe zu erfassen und die erfasste Information über die Verbindung 206 an die Vorrichtung 1 zu senden und/oder eine Information über die Verbindung 206 von der Vorrichtung 1 zu empfangen und die empfangene Information an einen Benutzer auszugeben.

Die Verbindung 206 ist beispielsweise eine drahtgebundene Kommunikationsverbindung eines Ethernet-Netzwerks oder eines CAN-, K-Leitungs-, LIN- oder Flexray Bussystems des Sattelaufliegers 200.

Der Sattelauflieger 200 kann beispielsweise einen Sensor 105a, 105b umfassen. Beispielsweise kann es sich bei dem zumindest einen Sensor um eine Kamera 105a und/oder einen Scanner 105b, beispielsweise einen Barcode Scanner und/oder einen QR-Code Scanner, handeln.

Der Sattelauflieger 200 kann ferner beispielsweise einen Reifendrucksensor 106a, einen Neigungssensor 106b und/oder einen Innenraumsensor 106c, z.B. zumindest eine Kamera 106c, aufweisen.

Die Ladefläche 209 des Sattelaufliegers 200 kann eine Ladeflächenhöhe 208 aufweisen, beispielsweise insbesondere im Heckbereich des Sattelaufliegers 200.

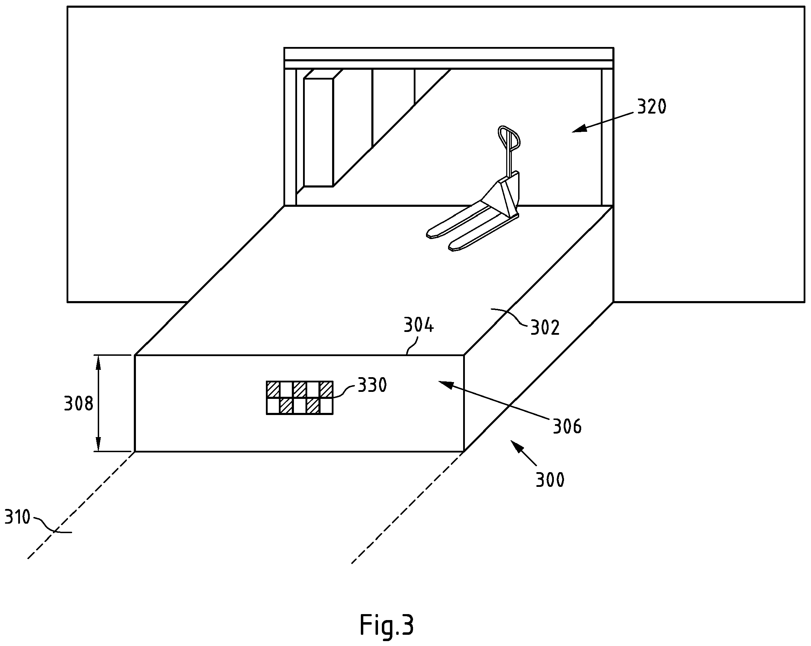

Fig. 3 zeigt eine beispielhafte Laderampe 300. Die Laderampe weist beispielsweise eine Stirnwand 306 und ein Laderampenplateau 302 auf. Das Laderampenplateau 302 grenzt zur Stirnwand 306 mit einer Stirnkante 304 an. Über die Laderampe 300 ist beispielsweise ein Lager 320 erreichbar. An der Laderampe 300 kann beispielsweise gezeigt an der Stirnwand 306 ein Markierungselement 330 angeordnet sein. Das Markierungselement 330 kann beispielsweise gezeigt in einem zentralen Bereich der Laderampe 300 angeordnet sein. Beispielsweise kann das Markierungselement 330 auch seitlich an der Laderampe 300 angeordnet sein und/oder auf dem Laderampenplateau 302.

Das Markierungselement 330 kann beispielsweise einen Schriftzug, eine Farbmarkierung, ein Barcode und/oder ein QR-Code und/oder Kombinationen hieraus umfassen. Beispielsweise kann das Markierungselement 330 an der Laderampe temporär befestigt sein, beispielsweise angeschraubt, angeklebt, aufgehängt, eingehängt, angenagelt, angetackert, eingeschoben und/oder angelehnt und oder Kombinationen hieraus.

Vor der Laderampe 300 kann sich eine durch ein Transportfahrzeug 200 befahrbarere Fläche 310 befinden. Ein vertikaler Abstand zwischen dem Laderampenplateau 302 und dem befahrbaren Bereich 310, beispielsweise im Bereich der Stirnfläche 306 der Laderampe 300 kann als eine Laderampenhöhe 308 bestimmt sein.

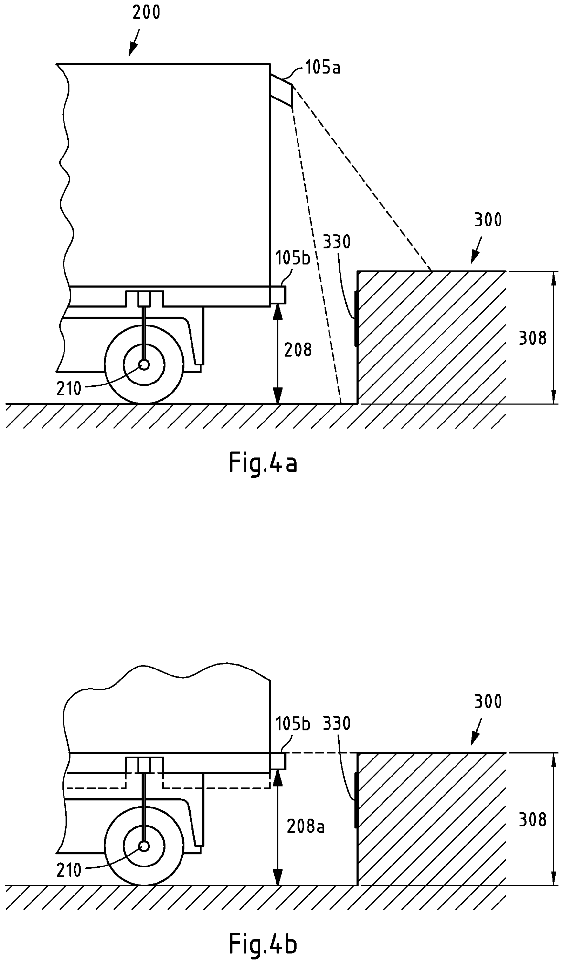

Figur 4a zeigt eine Annäherung eines Transportfahrzeugs 200 an eine Laderampe 300. Das Transportfahrzeug 200 weist eine Ladeflächenhöhe 208 auf. Die Laderampenhöhe 308 der Laderampe 300 weicht von der Ladeflächenhöhe 208 ab. Insbesondere ist die Laderampenhöhe 308 größer als die Ladeflächenhöhe 208. Das Transportfahrzeug 200 kann mittels zumindest einem Sensor 105a, 105b beispielsweise einer Kamera 105a und/oder einem Scanner 105b eine Aufnahme der Laderampe 300 erfassen. Basierend auf der Aufnahme kann ein auf der Laderampe 300 angebrachtes Markierungselement 330 identifiziert werden. Basierend auf dem Markierungselement 330 kann eine Laderampenhöhe 318 der Laderampe 300 bestimmt werden. Das Transportfahrzeug 200, beispielsweise eine davon umfasste Vorrichtung 1, kann also dazu eingerichtet sein, aus dem ausgelesenen Markierungselement 340 eine Laderampenhöhe 308 zu bestimmen.

Beispielsweise umfasst das Verfahren eine Bestimmung einer Differenz zwischen der Ladeflächenhöhe 208 und der Laderampenhöhe 308.

Das Transportfahrzeug 200 umfasst ferner zumindest eine Einstellvorrichtung 210. Die Einstellvorrichtung 210 kann beispielsweise an einem oder mehreren Rädern und/oder Radachsen des Transportfahrzeugs 200 angreifen und/oder dazu eingerichtet sein, zumindest eine Radachse des Transportfahrzeugs von der Ladefläche 209 in vertikaler Richtung variabel zu beabstanden. Die Einstellvorrichtung 210 kann beispielsweise in der in Fig. 4a in einer eingefahrenen Position gezeigt sein. Beispielsweise kann Fig. 4a eine minimal einstellbare Ladeflächenhöhe 208 zeigen.

In Fig. 4b ist eine Konfiguration des Transportfahrzeugs 200 gezeigt, in welcher die Ladeflächenhöhe 208a der Laderampenhöhe 308 angeglichen worden ist. Hierzu kann beispielsweise die Einstellvorrichtung 210 derart angesteuert worden sein, dass die Ladefläche 209 um eine Differenz zwischen der Ladeflächenhöhe 208, wie sie in Fig. 4a gezeigt ist, und der Laderampenhöhe 308 erhöht wird.

Fig. 5 ist ein Flussdiagramm einer Ausführungsform eines Verfahrens gemäß der Erfindung. Im Folgenden wird beispielhaft davon ausgegangen, dass das Verfahren durch die Vorrichtung 1, die Teil des in Fig. 2 dargestellten Sattelaufliegers 200 ist, ausgeführt wird.

In einem ersten Schritt M100 wird zumindest eine Aufnahme zumindest eines Teils einer Laderampe erfasst. Beispielsweise kann ein Sensor des Transportfahrzeugs die Aufnahme erfassen, insbesondere eine Kamera.

Basierend auf der zumindest einen Aufnahme kann in Markierungselement M102 zumindest ein an der Laderampe angebrachtes Markierungselement identifiziert werden. Das Markierungselement kann beispielsweise maschinenlesbar und/oder menschenlesbar sein. Beispielsweise kann das Markierungselement eine Information über eine Laderampenhöhe der Laderampe, von welcher die Aufnahme zumindest teilweise erfasst worden ist, umfassen.

In einem Schritt M104 wird ausgehend von dem zumindest einen identifizierten Markierungselement eine Laderampenhöhe der Laderampe abgeleitet. Beispielsweise kann hierfür die Information über die Laderampenhöhe aus dem Markierungselement extrahiert werden. Beispielsweise kann eine Information aus dem Markierungselement extrahiert werden, welche mit zumindest eine andere Information kombiniert die Laderampenhöhe ergibt.

Ferner umfasst das Verfahren ein Bestimmen einer an die abgeleitete Laderampenhöhe angepassten Ladeflächenhöhe einer Ladefläche des Transportfahrzeugs, Schritt M106. Beispielsweise kann die Ladeflächenhöhe zumindest im Wesentlichen an die Laderampenhöhe angeglichen werden. Die angepasste Ladeflächenhöhe kann also beispielsweise im Wesentlichen der abgeleiteten Laderampenhöhe entsprechen.

Ferner umfasst das Verfahren in einem Schritt M108 eine Steuerung und/oder Regelung der Ladeflächenhöhe des Transportfahrzeugs auf die bestimmte angepasste Ladeflächenhöhe.

Beispielsweise kann hierdurch sichergestellt werden, dass eine Be- und/oder Entladung des Transportfahrzeugs über die Laderampe sicher durchgeführt werden kann. Beispielsweise gelingt dies ohne manuellen Eingriff eines Fahrers der Zugfahrzeugs.

Die Schritte M100, M102, M104, M106 und M108 können in der in Fig. 5 dargestellten Reihenfolge oder in einer beliebigen anderen Reihenfolge erfolgen.

Die in dieser Spezifikation beschriebenen beispielhaften Ausführungsformen der vorliegenden Erfindung sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Schritte in den einzelnen Flussdiagrammen ist nicht zwingend, alternative Abfolgen der Schritte sind denkbar - soweit nicht anders angegeben. Die Schritte können auf verschiedene Art und Weise implementiert werden, so ist eine Implementierung in Software (durch Programmanweisungen), Hardware oder eine Kombination von beiden zur Implementierung der Schritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Komponente kann die Funktionen mehrerer in den Patentansprüchen genannten Einheiten bzw. Vorrichtungen ausführen. In den Patentansprüchen angegebene Bezugszeichen sind nicht als Beschränkungen der eingesetzten Mittel und Schritte anzusehen.

## Patentansprüche

1. Verfahren, ausgeführt von einem Transportfahrzeug (200), umfassend:
- Erfassen, mittels eines Sensors (105a, 105b) des Transportfahrzeugs (200), zumindest einer Aufnahme zumindest eines Teils einer Laderampe (300),
- Identifizieren zumindest eines an der Laderampe (300) angebrachten Markierungselements (330) basierend auf zumindest einer der zumindest einen Aufnahme,
- Ableiten, basierend auf dem zumindest einen angebrachten Markierungselement (330), einer Laderampenhöhe (308) der Laderampe (300),
- Bestimmen einer an die abgeleitete Laderampenhöhe (308) der Laderampe (300) angepassten Ladeflächenhöhe (208) einer Ladefläche des Transportfahrzeugs (200) basierend auf der abgeleiteten Laderampenhöhe (308) und
- Einstellen der Ladeflächenhöhe (208) des Transportfahrzeugs (200) auf die bestimmte angepasste Ladeflächenhöhe (308).

2. Verfahren gemäß Anspruch 1, wobei
- der Sensor (105a, 105b) eine Kamera umfasst, insbesondere wobei eine Position und/oder ein Blickwinkel der Kamera relativ zum Transportfahrzeug (200) fixiert ist.

3. Verfahren gemäß Anspruch 1 oder 2, wobei
- zumindest eines des zumindest einen Markierungselements (330) an einer senkrechten Stirnfläche der Laderampe (300) angebracht ist, insbesondere benachbart zu einer Stirnkante der Laderampe (300), und/oder
- zumindest eines des zumindest einen Markierungselements (330) an einem Laderampenplateau angebracht ist, insbesondere benachbart zu der Stirnkante der Laderampe (300).

4. Verfahren gemäß einem der Ansprüche 1 bis 3, wobei zumindest eines des zumindest einen Markierungselements (330)
- nachträglich an die Laderampe (300) anbringbar ist,
- lösbar an der Laderampe (300) befestigt ist,
- an die Laderampe (300) aufgeklebt ist und/oder
- ein Ausdruck ist, insbesondere in einem DIN A Format, insbesondere DIN A4.

5. Verfahren einem der Ansprüche 1 bis 4, wobei zumindest eines des zumindest einen Markierungselements (330)
- schwarz-weiß ausgeführt ist und/oder
- farbcodiert ausgeführt ist.

6. Verfahren gemäß einem der Ansprüche 1 bis 5, wobei zumindest eines des zumindest einen Markierungselements (330)
- eine Information zu der Laderampenhöhe (308) enthält, insbesondere wobei
- das Markierungselement (330) einen computerlesbarer Code umfasst, insbesondere einen Barcode, einen QR-Code, und/oder einen menschenlesbaren Code, beispielsweise einen Schriftzug, umfasst und/oder
- die Information zu der Ladehöhe (308) eine vorbestimmte absolute maximale Abweichung von einer tatsächlichen Laderampenhöhe (308) aufweist, insbesondere maximal 20 cm, 10 cm, 5 cm, 2 cm oder 1 cm und/oder
- die Information zu der Ladehöhe (308) eine vorbestimmte relative maximale Abweichung von einer tatsächlichen Laderampenhöhe (308) aufweist, insbesondere maximal 20 %, 15 %, 10 %, 5 %, 2 % oder 1 % der tatsächlichen Laderampenhöhe.

7. Verfahren gemäß einem der Ansprüche 1 bis 6, wobei
- das Ableiten der Laderampenhöhe (308) lokal von dem Transportfahrzeug (200) vorgenommen wird.

8. Verfahren gemäß einem der Ansprüche 1 bis 7, wobei
- die Laderampe (300) frei von einer Ausgleichsklappe und/oder einer Ladebrücke ist.

9. Verfahren gemäß einem der Ansprüche 1 bis 8, ferner umfassend:
- Bestimmen einer Neigung des Transportfahrzeugs (200) mittels eines Neigungssensors des Transportfahrzeugs (200).

10. Verfahren gemäß Anspruch 9, wobei
- das Bestimmen der angepassten Ladeflächenhöhe (208) zumindest teilweise basierend auf der bestimmten Neigung erfolgt.

11. Verfahren gemäß einem der Ansprüche 1 bis 10, wobei
- das Einstellen der Ladeflächenhöhe (208) mittels einer Einstellvorrichtung (210) des Transportfahrzeugs (200) vorgenommen wird, insbesondere einer hydraulischen und/oder pneumatischen Einstellvorrichtung (210).

12. Verfahren nach einem der Ansprüche 1 bis 11, wobei
- das Verfahren von einer Steuervorrichtung (1) des Transportfahrzeugs (200) gesteuert und/oder kontrolliert wird, insbesondere von einer Telematikeinheit.

13. Verfahren nach einem der Ansprüche 1 bis 12, wobei das Transportfahrzeug (200) eines der folgenden Fahrzeuge ist:
- ein Nutzfahrzeuggespann umfassend ein Zugfahrzeug und einen Nutzfahrzeuganhänger,
- ein Nutzfahrzeuganhänger, insbesondere ein Sattelauflieger.

14. Computerprogramm umfassend Programmanweisungen, die dazu ausgebildet sind, bei Ausführung durch mindestens einen Prozessor einer Vorrichtung, die Vorrichtung zu veranlassen, das Verfahren nach einem der Ansprüche 1 bis 13 auszuführen.

15. Vorrichtung umfassend Mittel eingerichtet zur Ausführung des Verfahrens nach einem der Ansprüche 1 bis 13.

16. Vorrichtung nach Anspruch 15, wobei die Vorrichtung ein Transportfahrzeug (200) oder ein Teil des Transportfahrzeugs (200) ist, insbesondere ein Nutzfahrzeuggespann umfassend ein Zugfahrzeug und einen Nutzfahrzeuganhänger, oder ein Nutzfahrzeuganhänger, insbesondere ein Sattelauflieger.
